# FASCICULE DE BREVET EUROPEEN

(11) **EP 2 395 594 B1**
(45) Date de publication et mention de la délivrance du brevet: **24.07.2013**
(21) Numéro de dépôt: 11354024.9
(22) Date de dépôt: 17.05.2011
(51) Int. Cl.: H01M 10/46, H01M 10/48, H02J 7/00, H02J 7/34, H02J 7/35, H02J 9/00

(54) **Dispositif et procédé d'alimentation pour système de communication sans fil et ensemble capteur comportant un tel dispositif**
Vorrichtung und Verfahren zur Stromversorgung eines mobilen Kommunikationssystems und eine Sensoranordnung, die eine derartige Vorrichtung aufweist.
Device and method for supplying a mobile communication system and a sensor arrangement including such a device.

(30) Priorité: 14.06.2010 FR 1002509
(43) Date de publication de la demande: 14.12.2011
(73) Titulaire: Schneider Electric Industries SAS, 92500 Rueil-Malmaison (FR)
(72) Inventeur: Raisigel, Hynek, 38050 Grenoble Cedex 09 (FR)
(74) Mandataire: Tripodi, Paul

(56) Documents cités:
- JP-A- 2010 098 874
- SU-A1- 1 462 432
- US-A- 5 949 218
- US-A1- 2009 308 933
- US-A1- 2010 060 231
- US-A1- 2010 109 765

## Description

### DOMAINE TECHNIQUE

L'invention concerne un dispositif d'alimentation pour système de communication sans fil comportant :
- une entrée pour être connectée à un générateur d'énergie électrique,
- des moyens de stockage d'énergie électrique pour stocker l'énergie électrique reçue, et
- des moyens de gestion de l'énergie électrique.

L'invention concerne aussi un ensemble capteur comportant :
- un capteur d'une grandeur physique à mesurer,
- un circuit de traitement connecté audit capteur pour traiter des données de mesure de la grandeur physique à mesurer,
- un émetteur radio fréquence pour la communication sans fil, et
- un dispositif d'alimentation pour système de communication sans fil.

L'invention concerne aussi un procédé d'alimentation pour système de communication sans fil.

### ETAT DE LA TECHNIQUE

Les dispositifs d'alimentation pour système de communication sans fils connus comportent généralement des moyens de stockage d'énergie électrique. De manière connue, les moyens de stockage d'énergie électrique sont des piles électriques, des batteries rechargeables ou des condensateurs de très forte capacité. Dans les dispositifs autonomes, l'énergie électrique est souvent fournie par des cellules ou de petits panneaux photovoltaïques.

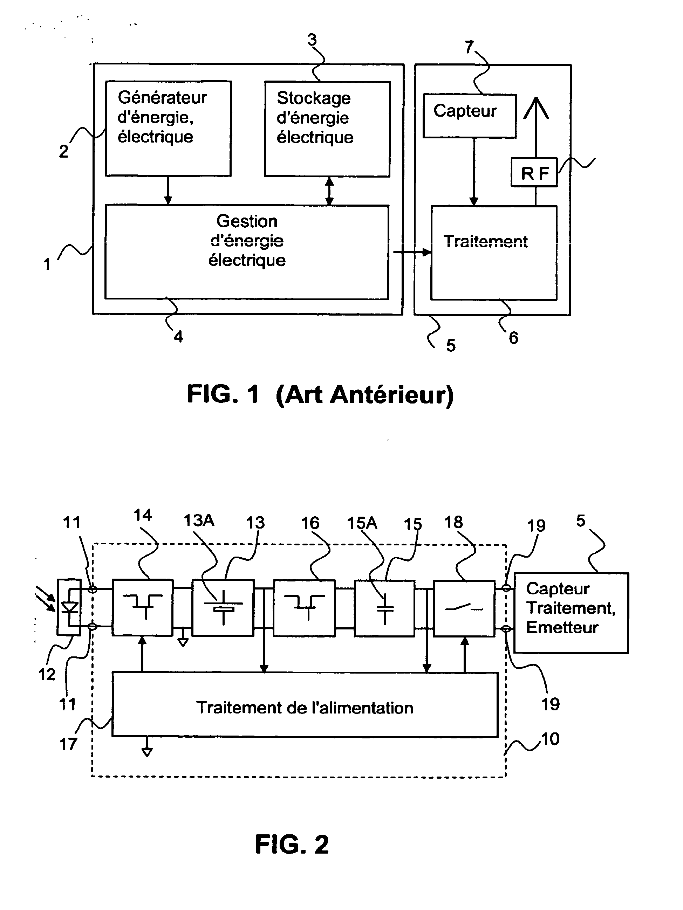

La figure 1 montre un schéma bloc d'un tel dispositif 1. Dans ce dispositif d'alimentation 1, un générateur 2 d'alimentation électrique alimente des moyens de stockage 3 à travers un régulateur 4 de tension et/ou de courant. L'énergie électrique stockée est alors fournie à un module capteur 5 pour faire fonctionner un circuit de traitement 6, un capteur de grandeur physique 7, et un émetteur radio fréquence 8. Le générateur d'énergie électrique est constitué de préférence par des cellules photovoltaïques.

La demande de brevet W02009021828 décrit un dispositif d'alimentation autonome de ce type. La demande de brevet EP1742373 divulgue aussi dispositif de ce type mais à double élément de stockage pour disposer rapidement d'une énergie accumulée. D'autres dispositifs sont décrits dans les documents US 5949218 et JP 2010098874.

Dans les dispositifs d'alimentation connus, les moyens de stockages sont généralement des condensateurs de fortes valeurs par exemple électrochimiques ou du type super-condensateurs. Dans d'autres dispositifs, des batteries rechargeables de grande capacité ou sont aussi utilisées.

Ces composants condensateurs de fortes valeurs ou des batteries rechargeables ont des caractéristiques de charges et de décharge en courant et en tension qui permettent un bon fonctionnement des circuits électroniques du circuit de communication et du capteur associé. Cependant, ces composants ont un défaut majeur qui est d'avoir un courant de fuite élevé et par conséquent un temps de décharge relativement court. Notamment, lorsque le générateur d'énergie électrique est un générateur photovoltaïque, il est indispensable de recharger tout les jours les moyens de stockage. Ainsi, de tels composants n'autorisent pas une disponibilité immédiate du capteur après une longue absence sans éclairage, par exemple de quelques semaines.

### EXPOSE DE L'INVENTION

L'invention a pour but un dispositif et un procédé d'alimentation pour système de communication sans fil permettant une disponibilité du fonctionnement même après une longue période d'absence d'alimentation électrique, ainsi qu'un ensemble capteur comportant un tel dispositif d'alimentation.

Un dispositif d'alimentation pour système de communication sans fil selon l'invention est défini dans les revendications.

Avantageusement, le dispositif comporte des moyens d'interruption de la fourniture d'énergie électrique sur une sortie lorsqu'une tension électrique sur les moyens de stockage devient inférieure à une tension prédéterminée.

Avantageusement, le dispositif comporte un générateur électrique de type photovoltaïque connecté à des entrées.

Un ensemble capteur selon l'invention comportant :
- un capteur d'une grandeur physique à mesurer,
- un circuit de traitement connecté audit capteur pour traiter des données de mesure de la grandeur physique à mesurer, et
- un émetteur radio fréquence pour la communication sans fil,
comporte un dispositif d'alimentation tel que décrit ci-dessus pour alimenter ledit capteur, ledit circuit de traitement et/ou ledit émetteur radio fréquence, le fonctionnement dudit capteur, d'un traitement des données de mesure et/ou d'une émission radio fréquence étant déclenchée par intermittence tant qu'une tension électrique sur lesdits premiers ou seconds moyens de stockage est supérieure à une valeur prédéterminée.

Un procédé d'alimentation pour système de communication sans fil selon l'invention est défini dans les revendications.

Dans un mode de réalisation particulier, le procédé comporte un traitement cyclique de circuits à alimenter comportant :
- l'activation d'au moins un capteur de mesure,
- le traitement de données fournies par ledit au moins un capteur,
- l'émission de messages radio fréquence, et
- la mise en veille profonde dudit au moins un capteur, dudit au moins émetteur et dudit traitement de données pendant une durée prédéterminée.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma block d'un dispositif de l'art antérieur ;
- la figure 2 représente un schéma block d'un dispositif d'alimentation selon un mode de réalisation de l'invention ;
- la figure 3 représente une courbe de durée de vie en fonction de la profondeur de décharge d'une batterie de stockage utilisée dans un dispositif selon un second mode de réalisation de l'invention ;
- la figure 4 représente une courbe de contrôle de charge et de décharge d'une batterie de stockage utilisée dans un dispositif selon un second mode de réalisation de l'invention ;
- la figure 5 représente un schéma détaillé d'un dispositif d'alimentation et d'un ensemble capteur selon un mode de réalisation de l'invention ;
- les figures 6A à 6D illustrent un chronogramme de fonctionnement d'un dispositif d'alimentation et d'un ensemble capteur selon un mode de réalisation de l'invention ;
- la figure 7 représente un organigramme d'un premier procédé selon un mode de réalisation de l'invention ; et
- la figure 8 représente un organigramme d'un second procédé selon un mode de réalisation de l'invention pour un ensemble capteur.

### DESCRIPTION DETAILLEE DE MODES DE REALISATION PREFERES

Dans un dispositif selon l'invention il est prévu d'utiliser des batteries rechargeables à faible courant de fuite. Ces batteries sont notamment de type bouton au lithium mais de technologies très différentes des batteries au lithium-ion utilisées dans des alimentations électriques de forte puissance. Les batteries rechargeables de type bouton au lithium sont généralement utilisées pour de très faibles courants destinés à la sauvegarde de mémoires ou pour l'alimentation d'horloges d'ordinateurs en période hors service. Ces batteries ont un très faible courant de fuite mais à cause de leur résistance interne très élevée elles ne sont pas prévues pour accepter un fort courant de charge ou de décharge. Typiquement les courants circulants dans ces batteries doivent être inférieurs à 1 mA. Avantageusement, dans un dispositif selon l'invention la batterie rechargeable à faible courant de fuite sera limitée en profondeur de décharge pour assurer une très longue longévité de fonctionnement, par exemple de plusieurs années. Le très faible courant de fuite de ce type de batterie est de l'ordre de 3% par an. Il est dons considérablement plus bas que celui des autres éléments de stockage d'énergie électrique de type batterie ou super-condensateur.

Ainsi un dispositif d'alimentation 10 pour système de communication sans fil comporte une entrée 11 pour être connectée à un générateur 12 d'énergie électrique, des moyens de stockage d'énergie électrique pour stocker l'énergie électrique reçue, et des moyens de régulation de l'énergie électrique. La figure 2 représente un schéma block d'un dispositif d'alimentation selon un mode de réalisation de l'invention. Dans ce dispositif, des premiers moyens de stockage 13 sont constitués par une batterie 13A rechargeable ayant un faible courant de fuite. Pour limiter la charge de la batterie, un premier limiteur 14 est connecté entre la l'entrée 11 et la batterie. Le premier limiteur 14 limite le courant ou interrompt la circulation d'un courant de charge desdits premiers moyens de stockage. Il permet aussi de limiter la tension de charge de la batterie lorsque sa valeur atteint un seuil haut prédéterminé. Le dispositif de la figure 2 comporte aussi des seconds moyens 15 de stockage à faible courant de fuite et à fort courant de décharge. De préférence, lesdits seconds moyens de stockage à faible courant de fuite et à fort courant de décharge sont constitués par au moins un condensateur de type céramique 15A. Pour limiter la décharge de la batterie 13A, un second limiteur 16 est connecté entre la batterie et les seconds moyens 15 de stockage à faible courant de fuite. Le second limiteur 16 limite la circulation d'un courant de décharge desdits premiers moyens de stockage.

Selon un mode réalisation de l'invention, le dispositif comporte un circuit 17 de traitement pour la gestion et de contrôle de la charge des premiers moyens 13 de stockage pour limiter une profondeur de décharge de la ladite batterie à faible courant de fuite. Par exemple, ladite profondeur de décharge est contrôlée pour être limitée à 5%. La dite profondeur de décharge peut aussi être contrôlée par des moyens d'interruption 18 de la fourniture d'énergie électrique sur une sortie 19 lorsqu'une tension électrique sur les moyens de stockage 13 et/ou 15 devient inférieure à une tension prédéterminée. Lesdits moyens d'interruption 18 sont connectés entre les moyens de stockage 15 et la sortie 19 d'alimentation d'un capteur 5.

Dans un dispositif selon le schéma de la figure 2, le générateur photovoltaïque 12 connecté aux entrées 11 alimente la batterie à faible courant de fuite du type bouton au lithium 13A à travers le premier limiteur 14. Ladite batterie 13A fournie le l'énergie électrique au condensateur 15A à travers le second limiteur 16 limitant le courant de décharge. Le condensateur 15A peut alors fournir une alimentation au circuit du capteur 5 avec un courant élevé pour permettre le fonctionnement pendant une durée prédéterminée du capteur 7, d'un circuit de traitement 6 et de l'émetteur 8 radio fréquence. Si la tension n'est plus suffisante sur la batterie un interrupteur 18 permet d'arrêter l'alimentation des circuits du capteur pour préserver la longévité de ladite batterie.

La profondeur de décharge de la batterie 13A durant une période de non-fonctionnement du générateur 12 est limitée par ultra-faible consommation moyenne de l'ensemble capteur. En cas d'un générateur photovoltaïque 12 une nuit correspond à une période élémentaire de décharge. Ainsi, pendant une nuit la profondeur de décharge de la batterie 13A est limitée au maximum à quelques pourcents de sa capacité nominale, typiquement de l'ordre de 0.1 à 5 %.

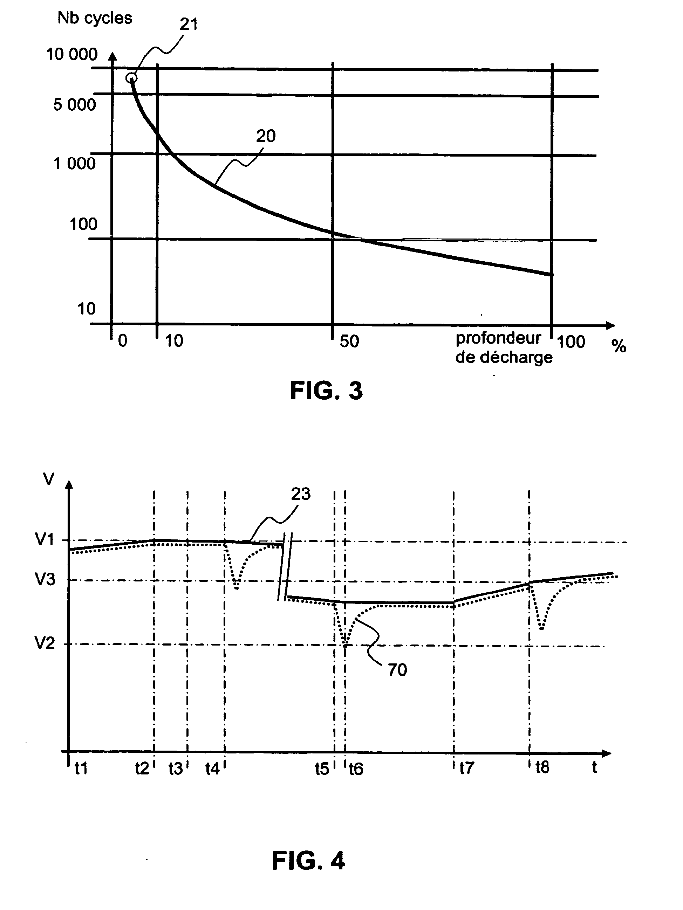

La figure 3 représente une courbe 20 de durée de vie en fonction de la profondeur de décharge d'une batterie de stockage utilisée dans un dispositif selon un second mode de réalisation de l'invention. Cette courbe 20 montre le nombre de cycles de charge-décharge du type bouton au lithium en fonction de la profondeur de décharge de ladite batterie. Le choix de limiter la profondeur de décharge de la batterie 13A à quelques pourcents permet d'atteindre un nombre cycles de charge-décharge très élevé de l'ordre 8000. Ce choix est repéré par une zone 21 sur la courbe 20.

La figure 4 représente une courbe 23 de charge et de décharge d'une batterie de stockage utilisée dans un dispositif selon un second mode de réalisation de l'invention. Par exemple, entre un instant t1 et un instant t2, la batterie est chargée par le générateur photovoltaïque 12. Cette charge se produit pendant la journée ou lorsque le générateur photovoltaïque et éclairé. Pendant cette charge le courant est limité dans la batterie. Puis à l'instant t2 la tension sur la batterie atteint une valeur haute V prédéterminée. Le premier limiteur limite alors la tension sur la batterie. A l'instant t3, le générateur ne fournit plus d'énergie et la batterie se décharge à cause de l'obscurité et par le fonctionnement du capteur avec des mesures et des émissions de messages radio fréquence. Ces périodes sont déclenchées à des instants t4, t5, t8 par exemple.

A ces instants la tension 70 sur le condensateur 15A chute temporairement en raison de la consommation du module de capteur 5 pendant des mesures et la transmission radio. Puis, la tension sur condensateur est lentement rechargée à partir de la batterie 13A via le second limiteur de courant 16 pendant que le module capteur 5 est en sommeil. Si la tension 70 sur condensateur 15A atteint une valeur basse V2, le moniteur de tension 17 ouvre l'interrupteur 18 pour éviter un fonctionnement non-optimal du module capteur 5 sous-alimenté en tension et en même temps pour éviter un endommagement de la batterie 13A par une décharge complète. Le moniteur de tension 17 maintient l'interrupteur 18 ouvert jusqu'à que la tension sur le condensateur 15A remonte à une valeur prédéfinie V3, suffisante pour un fonctionnement correct du module capteur 5. Dans l'exemple donné la tension V3 est atteinte à l'instant t8 puisque le générateur photovoltaïque 12 et de nouveau éclairé et recommence à produire l'énergie à l'instant t7.

Si la tension atteint une valeur basse V2, la décharge de la batterie est bloquée. L'écart entre V 1 et V2 est contrôlé pour avoir une profondeur de décharge limitée. Avantageusement, cette profondeur de décharge est de l'ordre de 2 à 5 %.

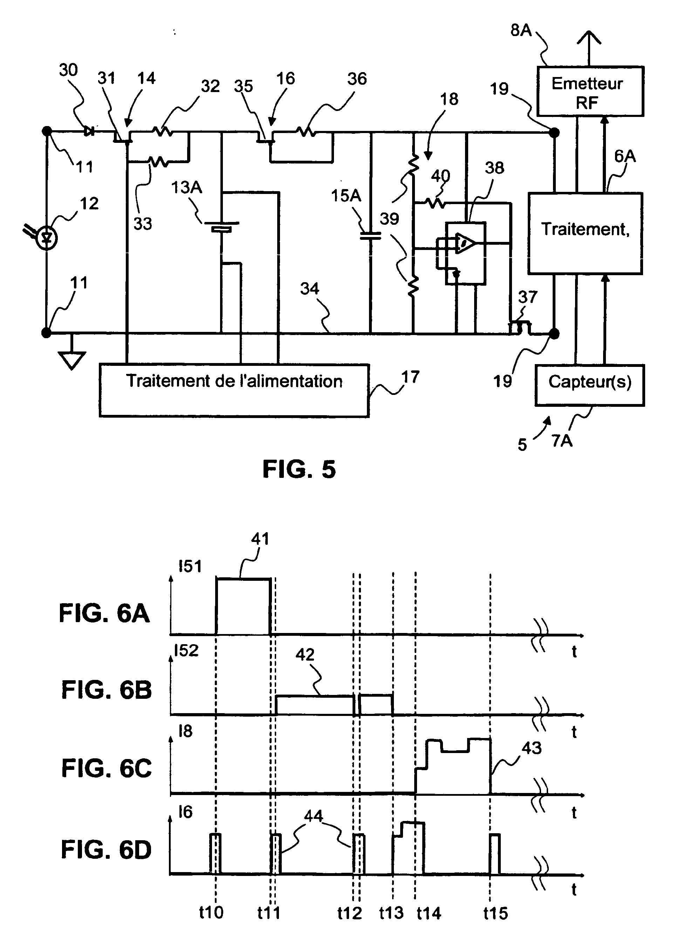

La figure 5 représente un schéma détaillé d'un dispositif d'alimentation et d'un ensemble capteur selon un mode de réalisation de l'invention. Le générateur photovoltaïque est connecté sur les entrées 11. Une diode 30 connectée entre une première entrée 30 et le premier régulateur 14 est en série avec le générateur pour empêcher toute décharge de courant vers le générateur. Le premier régulateur 14 de courant et de tension comporte un transistor à effet de champ 31 en série avec une résistance 32 connectée à sa source. La grille de commande du transistor est connectée à une autre borne de la résistance 32 avec une résistance 33 pour assurer la limitation de courant par le transistor. Le transistor est aussi connecté au circuit de traitement 7 pour assurer la limitation ou la régulation en tension, la limitation en courant étant assurée de manière autonome par le transistor 32. La batterie 13A est connectée en aval du premier régulateur 14 et à une ligne de référence 34. Le circuit de traitement 17 reçoit un signal de tension de la batterie 13A pour effectuer notamment la régulation en tension.

Le second régulateur 16 est connecté à la batterie 13A. Il comporte un transistor à effet de champ 35 en série avec une résistance 36 connectés à sa source. La grille de commande du transistor est connectée à une autre borne de la résistance 32 pour assurer de manière autonome la limitation de courant par le transistor. Le condensateur 15A est connecté en aval du second régulateur 16 et à la ligne de référence 34.

Les transistors à effet de champ 31 et 35 sont de préférence des transistors à déplétion permettant une polarisation autonome en montage limiteur de courant.

Les moyens d'interruption 18 de la fourniture d'énergie électrique sur une sortie 19 sont connectés en aval du condensateur 15. Ils comprennent un interrupteur statique tel qu'un transistor à effet de champ 37 de type MOSFET connecté en série sur la ligne de référence 34. Cet interrupteur statique est commandé par un comparateur de tension 38 intégré à hystérésis. Ce comparateur comprend une référence de tension interne pour comparer une portion de tension d'un pont diviseur résistif 39 à ladite référence. Une résistance 40 entre la sortie et l'entrée du comparateur détermine l'amplitude de l'hystérésis.

L'ensemble capteur de la figure 5 comporte aussi un capteur 7A d'une grandeur physique à mesurer, un circuit de traitement 6A connecté audit capteur pour traiter des données de mesure de la grandeur physique à mesurer, et un émetteur 8A radio fréquence pour la communication sans fil. Ces éléments sont alimentés par le dispositif d'alimentation décrit ci-dessus. Le fonctionnement dudit capteur, d'un traitement des données de mesure et/ou d'une émission radio fréquence est déclenché par intermittence tant que la tension électrique sur la batterie 13A ou sur le condensateur 15A est supérieure à une valeur prédéterminée. Sur la figure 5, l'intermittence est contrôlée par le circuit de traitement 6A qui déclenche l'alimentation du capteur 7A et de l'émetteur 8A.

Les figures 6A à 6D illustrent un chronogramme de fonctionnement d'un dispositif d'alimentation et d'un ensemble capteur selon un mode de réalisation de l'invention. Sur la figure 6A, une courbe 41 montre l'activité d'un capteur de gaz carbonique CO2. Cette activité commence à l'instant t10 et est déclenchée par une activité d'un processeur du circuit de traitement 6A représentée sur la figure 6D par une courbe 44. A un instant t11, l'activité du capteur de gaz carbonique s'arrête, les données sont transférées au circuit de traitement 6A et une activité d'un capteur par exemple de température représentée par une courbe 42 est déclenchée par le processeur. A un instant t12, le processeur peut changer le mode de fonctionnement du capteur. A un instant t14, les capteurs ont terminé leur fonction et le circuit de traitement traite les données à transmettre. Puis, a un instant t14, le circuit de traitement déclenche la transmission des données. A la fin de la transmission, à un instant t15, le circuit de traitement commande la mise en veille ou en sommeil profond des circuits associés. Par exemple, il commande la déconnexion de l'alimentation des capteurs et de l'émetteur ou leur mise en sommeil profond.

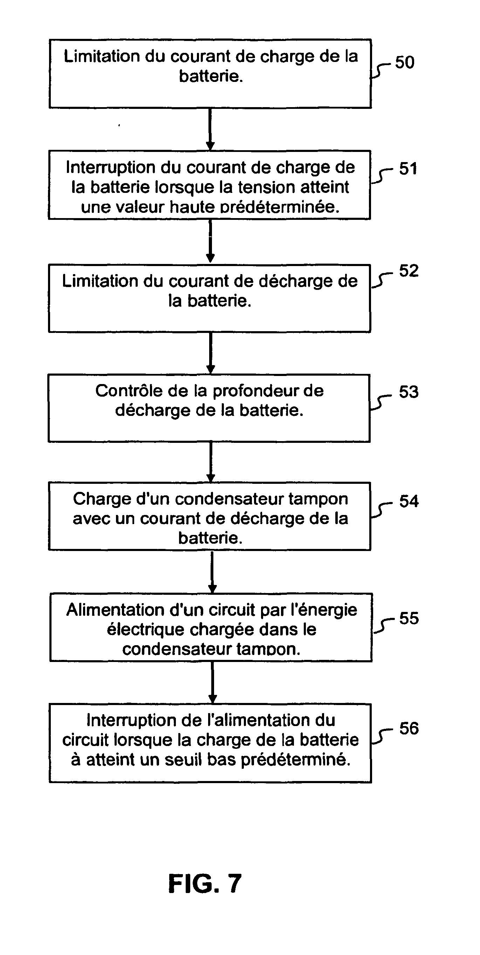

La figure 7 représente un organigramme d'un premier procédé selon un mode de réalisation de l'invention. Une étape 50 effectue la limitation d'un courant de charge dans des premiers moyens de stockage tels que la batterie 13A. Ensuite à une étape S1, le courant de charge dans la batterie est interrompu lorsque la tension atteint une valeur haute V1 prédéterminée. Une étape 52 effectue la limitation d'un courant de décharge dans des premiers moyens de stockage tels que la batterie 13A. Une étape 53 effectue le contrôle de la profondeur de décharge dans la batterie pour garantir un nombre de cycle de charge-décharge très élevé. Avantageusement, la profondeur de décharge est contrôlée pour être limitée à 5%. La faible consommation moyenne du capteur par un fonctionnement intermittent et le faible courant de fuite de la batterie permet aussi de limitée naturellement la profondeur de charge sans blocage en fonctionnement normal journalier.

Une étape 54 effectue la charge de seconds moyens de stockage tel qu'un condensateur tampon 15A par un courant de décharge limité de la batterie 13A. A une étape 55, l'alimentation d'un circuit d'un capteur avec l'énergie électrique chargée dans le condensateur tampon 15A est effectuée. Une étape 56 active le blocage de la fourniture de d'énergie électrique lorsque la charge des moyens de stockage est inférieure à une valeur prédéterminée. Il y a alors interruption de l'alimentation du circuit lorsque la charge de la batterie 13A ou du condensateur 15A a atteint un seuil bas V2 prédéterminé.

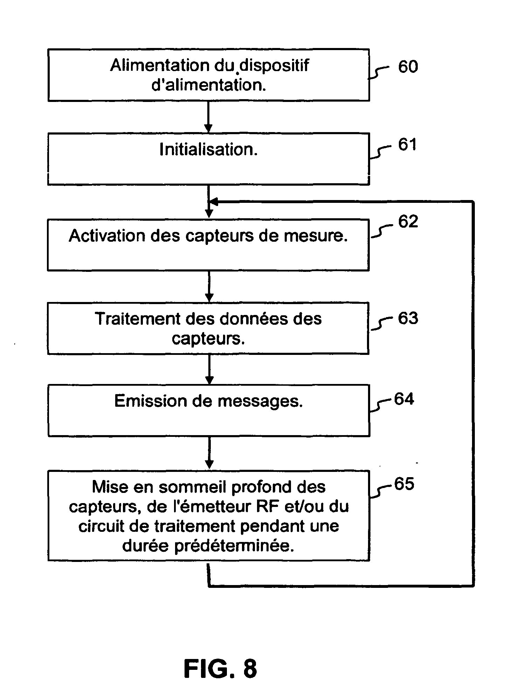

La figure 8 représente un organigramme d'un second procédé selon un mode de réalisation de l'invention pour un ensemble capteur. Ce procédé comporte une étape 60 de début d'alimentation du dispositif et une étape 61 d'initialisation. Ensuite, un traitement cyclique ou périodique des circuits à alimenter comporte des étapes suivantes. Une étape 62 d'activation d'au moins un capteur de mesure effectue notamment la mesure de gaz carbonique ou de température. Une étape 63 de traitement de données fournies par ledit au moins un capteur traite et met en forme les données de mesure. Une étape 64 effectue l'émission de messages radio fréquence. Puis, une étape 65 commande la mise en veille ou en sommeil profonds du ou des capteurs, de l'émetteur et du circuit de traitement de données pendant une durée prédéterminée.

Les schémas décrits ci-dessus sont donnés à titre d'exemples pour donner le mode de réalisation préféré. Cependant, d'autres schémas sont possibles. Par exemple les circuits de traitements 17, 6A et/ou 7A peuvent être regroupés dans un même circuit. Le générateur d'énergie décrit ci-dessus est une cellule photovoltaïque mais d'autres générateurs sont possibles. Par exemple, des générateurs à effet thermoélectrique, inductif, mécanique ou éolien.

Parmi les batteries utilisées dans des dispositifs selon des modes de réalisation de l'invention il y a au moins la référence ML 1220 des sociétés SANYO ou VARTA.

## Revendications

1. Dispositif d'alimentation pour système de communication sans fil comportant :
- une entrée (11) pour être connectée à un générateur (12) d'énergie électrique,
- des moyens de stockage (3) d'énergie électrique pour stocker l'énergie électrique reçue,
- des moyens de gestion (4) de l'énergie électrique,
dispositif **caractérisé en ce qu'**il comporte :
- des premiers moyens de stockage (13, 13A) constitués par une batterie rechargeable à faible courant de fuite, et des seconds moyens de stockage,
- des moyens de gestion et de contrôle (17, 18) de la charge des premiers moyens de stockage pour limiter une profondeur de décharge de ladite batterie,
- un premier limiteur (14, 31, 32, 33) de courant connecté entre ladite entrée (11) et lesdits premiers moyens de stockage (13, 13A) pour limiter ou interrompre la circulation d'un courant de charge dans lesdits premiers moyens de stockage (13, 13A),
- un second limiteur (16, 35, 36) de courant connecté entre lesdits premiers moyens de stockage (13, 13A) et lesdits seconds moyens de stockage (15, 15A) pour limiter la circulation d'un courant de décharge desdits premiers moyens de stockage.
- des moyens d'interruption (18, 37-40) de la fourniture d'énergie électrique sur une sortie (19) lorsqu'une tension électrique sur les moyens de stockage (13, 13A, 15, 15A) devient inférieure à une tension (V2) prédéterminée.

2. Dispositif selon la revendication 1 **caractérisé en ce que** ladite profondeur de décharge est contrôlée pour être limitée à moins de 5%.

3. Dispositif selon l'une des revendications 1 ou 2 **caractérisé en ce que** ladite batterie rechargeable à faible courant de fuite est du type bouton au lithium.

4. Dispositif selon l'une quelconque des revendications 1 à 3 **caractérisé en ce qu'**il comporte des seconds moyens de stockage (15, 15A) à faible courant de fuite et à fort courant de décharge.

5. Dispositif selon la revendication 4 **caractérisé en ce que** lesdits seconds moyens de stockage (15, 15A) à faible courant de fuite et à fort courant de décharge comporte au moins un condensateur (15A) de type céramique.

6. Dispositif selon l'une quelconque des revendications 1 à 5 **caractérisé en ce qu'**il comporte un générateur électrique (12) de type photovoltaïque connecté à des entrées (11).

7. Ensemble capteur comportant :
- un capteur (7, 7A) d'une grandeur physique à mesurer,
- un circuit de traitement (6, 6A) connecté audit capteur pour traiter des données de mesure de la grandeur physique à mesurer, et
- un émetteur (8, 8A) radio fréquence pour la communication sans fil,
**caractérisé en ce qu'**il comporte un dispositif d'alimentation selon l'une quelconque des revendications 1 à 6 pour alimenter ledit capteur (7, 7A), ledit circuit de traitement (6, 6A) et/ou ledit émetteur (8, 8A) radio fréquence, le fonctionnement dudit capteur, d'un traitement des données de mesure et/ou d'une émission radio fréquence étant déclenchée par intermittence tant qu'une tension électrique sur lesdits premiers ou seconds moyens de stockage est supérieure à une valeur prédéterminée (V2).

8. Procédé d'alimentation pour système de communication sans fil **caractérisé en ce qu'**il comporte :
- la limitation (50) d'un courant de charge dans des premiers moyens de stockage (13, 13A),
- la limitation (52) d'un courant de décharge dans des premiers moyens de stockage (13, 13A),
- le contrôle de la profondeur de décharge (53) dans des premiers moyens de stockage (13, 13A), et
- le blocage (56) de la fourniture d'énergie électrique lorsque la charge des moyens de stockage est inférieure à une valeur prédéterminée (V2),
- la charge (54) de seconds moyens de stockage (15, 15A) par un courant de décharge limité desdits premiers moyens de stockage (13, 13A).

9. Procédé d'alimentation selon la revendication 8 **caractérisé en ce que** ladite profondeur de décharge est contrôlée pour être limitée à moins de 5%.

10. Procédé d'alimentation selon l'une des quelconque des revendications 8 ou 9 **caractérisé en ce qu'**il comporte un traitement cyclique de circuits à alimenter comportant :
- l'activation (62) d'au moins un capteur de mesure,
- le traitement (63) de données fournies par ledit au moins un capteur,
- l'émission (64) de messages radio fréquence, et
- la mise en veille profonde (65) dudit au moins un capteur, dudit au moins émetteur et dudit traitement de données pendant une durée prédéterminée.

## Patentansprüche

1. Stromversorgungseinrichtung für ein drahtloses Kommunikationssystem mit
- einem Eingang zum Anschluss (11) an einen elektrischen Energieerzeuger (12),
- Energiespeichermitteln (3) zur Speicherung der aufgenommenen elektrischen Energie,
- Steuermitteln (4) zur Steuerung der elektrischen Energie,
welche Einrichtung **dadurch gekennzeichnet ist, dass** sie
- erste Speichermittel (13, 13A), die als wiederaufladbare Batterie mit niedrigem Leckstrom ausgebildet sind, sowie zweite Speichermittel,
- Mittel zur Steuerung und Überwachung (17, 18) des Ladezustand der ersten Speichermittel, um die Entladetiefe der genannten Batterie zu begrenzen,
- einen ersten Strombegrenzer (14, 31, 32, 33), der zwischen den genannten Eingang (11) und die genannten ersten Speichermittel (13, 13A) geschaltet ist, um den Ladestrom in den genannten ersten Speichermitteln (13, 13 A) zu begrenzen oder zu unterbrechen,
- einen zweiten Strombegrenzer (16, 35, 36), der zwischen die genannten ersten Speichermittel (13, 13A) und die genannten zweiten Speichermittel (15, 15A) geschaltet ist, um den Entladestrom der genannten ersten Speichermittel zu begrenzen, sowie
- Mittel (18, 37-40) umfasst, um die an einen Ausgang (19) gelieferte elektrische Energie zu unterbrechen, wenn die elektrische Spannung an den Speichermitteln (13, 13A, 15, 15A) unter einen bestimmten Spannungswert (V2) fällt.

2. Einrichtung nach Anspruch 1 **dadurch gekennzeichnet, dass** die genannte Entladetiefe so gesteuert wird, dass eine Begrenzung auf unter 5 % erfolgt.

3. Einrichtung nach einem der Ansprüche 1 oder 2, **dadurch gekennzeichnet, dass** die genannte wiederaufladbare Batterie mit niedrigem Leckstrom als Lithium-Knopfbatterie ausgebildet ist.

4. Einrichtung nach irgendeinem der Ansprüche 1 bis 3, **dadurch gekennzeichnet, dass** sie zweite Speichermittel (15, 15A) mit niedrigem Leckstrom und hohem Entladestrom umfasst.

5. Einrichtung nach Anspruch 4, **dadurch gekennzeichnet, dass** die genannten zweiten Speichermittel (15, 15A) mit niedrigem Leckstrom und hohem Entladestrom mindestens einen Kondensator (15A) vom Typ Keramikkondensator umfasst.

6. Einrichtung nach irgendeinem der Ansprüche 1 bis 5, **dadurch gekennzeichnet, dass** sie eine an Eingänge (11) angeschlossene elektrische Energiequelle vom Typ photovoltaischer Generator umfasst.

7. Sensoranordnung mit
- einem Sensor (7, 7A) zur Messung einer physikalischen Größe,
- einer an den genannten Sensor angeschlossenen Verarbeitungsschaltung (6, 6A) zur Verarbeitung der Messdaten der physikalischen Messgröße sowie
- einem Funksender (8, 8A) zur drahtlosen Kommunikation,
**dadurch gekennzeichnet, dass** die Anordnung eine Stromversorgungseinrichtung nach irgendeinem der Ansprüche 1 bis 6 zur Stromversorgung des genannten Sensors (7, 7A), die genannte Verarbeitungsschaltung (6, 6A) und/oder den genannten Funksender (8, 8A) umfasst, wobei der Betrieb des genannten Sensors, die Verarbeitung der Messdaten und/ oder die Aussendung eines Funksignals im Aussetzbetrieb erfolgen, wenn eine an den genannten ersten bzw. zweiten Speichermitteln anliegende Spannung einen bestimmten Wert (V2) überschreitet.

8. Stromversorgungsverfahren für ein drahtloses Kommunikationssystem, **dadurch gekennzeichnet, dass** es
- die Begrenzung (50) eines Ladestroms in ersten Speichermitteln (13, 13A),
- die Begrenzung (52) eines Entladestroms in ersten Speichermitteln (13, 13A),
- die Steuerung der Entladetiefe (53) in ersten Speichermitteln (13, 13A),
- die Unterbrechung (56) der gelieferten elektrischen Energie bei einem Ladestand der Speichermittel unterhalb eines bestimmten Werts (V2) sowie
- die Ladung (54) der zweiten Speichermittel (15, 15A) mit einem begrenzten Entladestrom der ersten Speichermittel (13, 13A) umfasst.

9. Stromversorgungsverfahren nach Anspruch 8, **dadurch gekennzeichnet, dass** die genannte Entladetiefe so gesteuert wird, dass eine Begrenzung auf unter 5 % erfolgt.

10. Stromversorgungsverfahren nach irgendeinem der Ansprüche 8 oder 9, **dadurch gekennzeichnet, dass** es eine zyklische Verarbeitung der zu versorgenden Stromkreise mit
- Aktivierung (62) mindestens eines Messsensors,
- Verarbeitung (63) der von dem mindestens einfach vorhandenen Messsensor gelieferten Daten,
- Aussendung (64) von Funksignalen und
- Umschaltung des mindestens einfach vorhandenen Sensors, des genannten mindestens einfach vorhandenen Senders und der genannten Datenverarbeitung in einen Bereitschaftsmodus (65) mit einer bestimmten Dauer umfasst.

## Claims

1. A power supply device for a wireless communication system comprising:
- an input (11) to be connected to an electric power generator (12),
- electric power storage means (3) to store the electric power received,
- electric power management means (4),
a device **characterized in that** it comprises:
- first storage means (13, 13A) constituted by a rechargeable battery with low leakage current, and second storage means,
- management and control means (17, 18) of the charge of the first storage means to limit a depth of discharge of said battery
- one of claims 1 to 5 **characterized in that** it comprises a first current limiter (14, 31, 32, 33) connected between said input (11) and said first storage means (13, 13A) to limit or interrupt the flow of a charging current in said first storage means (13, 13A),
- a second current limiter (16, 35, 36) connected between said first storage means (13, 13A) and said second storage means (15, 15A) to limit the flow of a discharge current of said first storage means
. means for interrupting (18, 37-40) the electric power supply on an output (19) when an electric voltage on the storage means (13, 13A, 15, 15A) drops below a predefined voltage (V2).

2. The device according to claim 1 **characterized in that** said depth of discharge is controlled to be limited to less than 5%.

3. The device according to one of claims 1 or 2 **characterized in that** said rechargeable battery with low leakage current is of the lithium button-cell type.

4. The device according to any one of claims 1 to 3 **characterized in that** it comprises second storage means (15, 15A) with low leakage current and high discharge current.

5. The device according to claim 4 **characterized in that** said second storage means (15, 15A) with low leakage current and high discharge current comprise at least one capacitor (15A) of ceramic type.

6. The device according to any one of claims 1 to 5 **characterized in that** it comprises an electric generator (12) of photovoltaic type connected to inputs (11).

7. A sensor assembly comprising:
- a sensor (7, 7A) of a physical quantity to be measured,
- a processing circuit (6, 6A) connected to said sensor to process measurement data of the physical quantity to be measured, and
- a radiofrequency transmitter (8, 8A) for wireless communication,
**characterized in that** it comprises a power supply device according to any one of claims 1 to 6 to supply said sensor (7, 7A), said processing circuit (6, 6A) and/or said radiofrequency transmitter (8, 8A), operation of said sensor, of measurement data processing and/or of radiofrequency transmission being triggered intermittently so long as an electric voltage on said first or second storage means is higher than a predefined value (V2).

8. A power supply method for a wireless communication system **characterized in that** it comprises:
- limiting (50) of a charging current in first storage means (13, 13A),
- limiting (52) of a discharge current in first storage means (13, 13A),
- controlling the depth of discharge (53) in first storage means (13, 13A), and
- disabling (56) the electric power supply when the charge of the storage means is lower than a predefined value (V2),
- charging (54) of second storage means (15, 15A) by a limited discharge current of said first storage means (13, 13A).

9. The power supply method according to claim 8 **characterized in that** said depth of discharge is controlled to be limited to less than 5%.

10. The power supply method according to any one of claims 8 or 9 **characterized in that** it comprises cyclic processing of circuits to be supplied comprising:
- activation (62) of at least one measurement sensor,
- processing (63) of data provided by said at least one sensor,
- transmission (64) of radiofrequency messages, and
- switching (65) of said at least one sensor, of said at least one transmitter and of said data processing to deep standby during a predefined period.
